# FASCICULE DE BREVET EUROPEEN

(11) **EP 4 110 653 B1**
(45) Date de publication et mention de la délivrance du brevet: **26.03.2025**
(21) Numéro de dépôt: 21710546.9
(22) Date de dépôt: 19.02.2021
(51) Int. Cl.: B60R 11/02

(54) **AGENCEMENT DE SUPPORT ADAPTE POUR MAINTENIR UN APPAREIL MULTIMEDIA NOMADE DANS UN VEHICULE ET VEHICULE CORRESPONDANT**
TRÄGERANORDNUNG ZUM HALTEN EINES MOBILEN MULTIMEDIA-GERÄTS IN EINEM FAHRZEUG UND ENTSPRECHENDES FAHRZEUG
SUPPORT ARRANGEMENT ADAPTED TO HOLD A MOBILE MULTIMEDIA DEVICE IN A VEHICLE AND CORRESPONDING VEHICLE

(30) Priorité: 28.02.2020 FR 2002036
(43) Date de publication de la demande: 04.01.2023
(73) Titulaire: Stellantis Auto SAS, 78300 Poissy (FR)
(72) Inventeur: GAUTHIER, Damien, 78120 RAMBOUILLET (FR); LE FLOCH, Bertrand, 91140 VILLEBON SUR YVETTE (FR); MICHEL, Thierry, 78110 LE VESINET (FR)
(74) Mandataire: ESIP
(86) Numéro de dépôt international: PCT/FR2021/050299
(87) Numéro de publication internationale: WO 2021/170943

(56) Documents cités:
- EP-A1- 2 860 071
- WO-A1-00/56042
- WO-A1-2010/034943
- WO-A1-2016/022840
- KR-U- 20120 004 654
- US-A1- 2006 181 840

## Description

### Domaine technique de l'invention

La présente invention concerne un agencement de support multiprise adapté pour maintenir également un appareil multimédia nomade dans un véhicule. L'appareil multimédia pouvant être un smartphone ou une tablette.

### Etat de la technique

Dans l'état de la technique, nous connaissons le document US5180089 décrivant un agencement pour un écran de visualisation qui est monté coulissant par rapport à un rail horizontal et cet écran est porté par un pivot perpendiculaire à la direction du rail. Cet écran de visualisation est mobile uniquement que dans un plan horizontal et par conséquent, il n'est à même de s'adapter aux différents champs de visions des passagers ou conducteurs de taille, ni de prévenir par une orientation adéquate, l'apparition de reflets sur l'écran. Le document FR2829979 décrit un agencement pour un élément d'affichage monté mobile par rapport à une planche de bord de véhicule qui est située dans le champ de vision d'un conducteur, dans lequel l'élément d'affichage est porté par une tige de support dont une base montée coulissante dans un rail sensiblement horizontal solidaire de la planche de bord, la tige de support comporte au moins une bielle, qui est interposée entre l'élément d'affichage et la base, et dont une première extrémité, tournée vers la base, et une seconde extrémité, tournée vers l'élément d'affichage, comportent des premiers et deuxième paliers respectifs d'axes parallèles à celui du rail, pour permettre l'inclinaison de l'élément d'affichage et son déplacement dans un plan perpendiculaire à l'axe du rail.

Cet agencement montre que l'élément d'affichage est monté en porte à faux, et présente l'inconvénient d'être sensible aux vibrations et instable, lorsque qu'un utilisateur touche un écran tactile. Ces agencements montrent également que les écrans sont placés relativement éloignés des utilisateurs. Ceux-ci doivent appuyer leur regard sur l'écran pour bien le lire, ce qui est préjudiciable vis-à-vis de la conduite du véhicule et de la sécurité.

Le document WO 2010/034943 divulgue un dispositif de fixation pour fixer un appareil sur un élément d'un habitacle de véhicule, tel un appareil de navigation portatif sur un sous-ensemble de pilotage, ledit dispositif de fixation comprenant une patte de fixation apte à être reliée à l'élément d'habitacle et comprenant en outre un réceptacle comportant des moyens de maintien aptes à maintenir l'appareil caractérisé en ce que le réceptacle est relié de façon amovible par des moyens de connexion-déconnexion-reconnexion à la patte de fixation de sorte que le réceptacle soit démontable de la patte de fixation sans outils.

### Exposé de l'invention

Le but de l'invention est donc de proposer une solution de fixation de l'appareil ergonomique dans toutes les situations.

A cet effet, la présente invention a pour objet un agencement de support, tel que défini dans la revendication 1, adapté pour maintenir un appareil multimédia nomade dans l'habitacle d'un véhicule, ledit support étant fixé sur un bras, ledit bras s'étendant depuis une tubulure guidant la colonne de direction.

De préférence, le support est fixé sur le bras par clippage.

Avantageusement, le support comporte une série de prise de type USB ou d'autre type d'alimentation.

Selon la présente invention, le support comporte une cavité ménagée depuis sa paroi supérieure.

Selon la présente invention, la cavité comporte des parois avant et arrière transversales inclinées.

Selon la présente invention, la cavité comporte dans son fond un passage traversant à proximité de la paroi inclinée avant.

Selon la présente invention, un volet est monté pivotant, en position ouvert le volet vient en appui sur la paroi inclinée arrière de la cavité, en position fermé le volet obture la cavité.

Selon la présente invention, la cavité comporte dans son fond un passage traversant à proximité de la paroi inclinée avant.

Suivant une variante, le volet comporte un appendice sous forme d'une platine rectangulaire disposé en saillie radiale, orienté vers l'avant. Suivant une autre variante, l'appendice est prolongé par une boursouflure sensiblement cylindrique à son extrémité libre.

Par ailleurs, l'invention a également pour objet, un véhicule comprenant un agencement de support fixé sur un bras s'étendant depuis la tubulure de guidage de la colonne de direction suivant les caractéristiques susmentionnées.

### Brève description des figures

D'autres caractéristiques et avantages de l'invention apparaîtront clairement à la lecture de la description ci-après, donnée à titre indicatif en référence aux dessins annexés dans lesquels:
[Fig.1] La figure 1 est une vue schématique en perspective de l'agencement d'un support d'un appareil multimédia, suivant l'invention ;
[Fig.2] Les figures 2 et 3 sont respectivement une vue agrandie du support sur lequel l'appareil multimédia est maintenu et une vue de profil du support sur lequel maintenu un appareil multimédia, suivant l'invention.
[Fig.3] La figure 3 est une vue du support selon un mode de réalisation de l'invention.
[Fig.4] La figure 4 est une vue de profil du support sur lequel l'appareil multimédia est fixé par la pince d'un élément de supportage sur une ailette du dit support.

### Description détaillée de l'invention

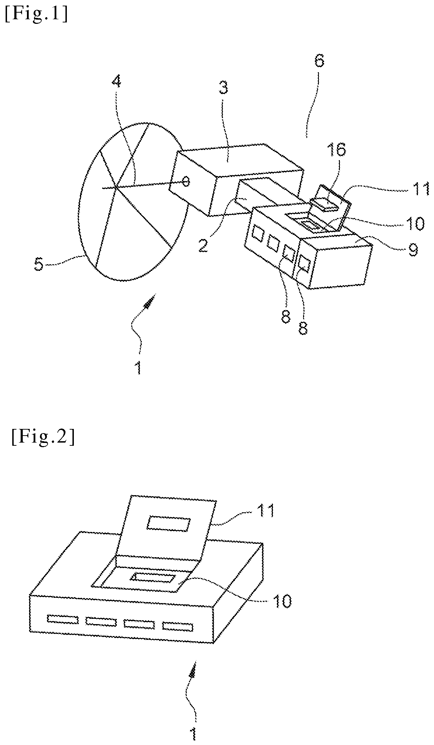

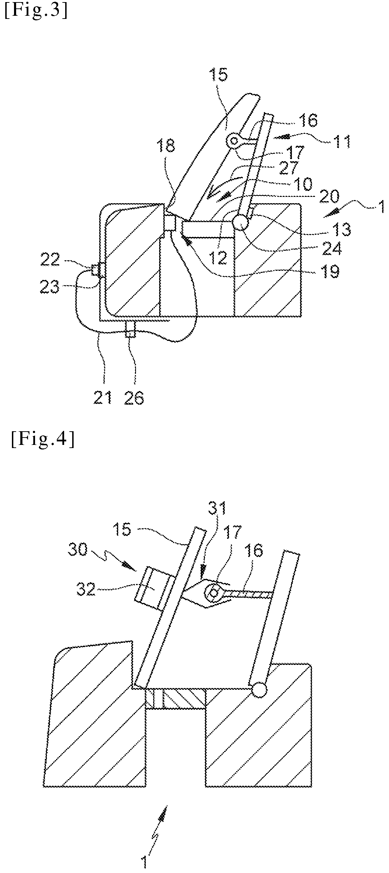

La figure 1 est une vue schématique en perspective de l'agencement d'un support 1 d'un appareil multimédia, suivant l'invention. Le support 1 est monté sur un bras 2 s'étendant depuis une tubulure 3 de la colonne de direction 4 du véhicule. La colonne de direction 4 est actionnée par le volant 5, elle est guidée à proximité du volant 5 à l'extérieur de la planche de bord 6 par une tubulure 3 dont l'extérieur peut être de section carrée, circulaire ou autres formes quelconques. Le support 1 est de forme sensiblement parallélépipédique, il comporte sur sa face avant une série de prise de type USB 8 ou autre de manière à connecter un câble pour recharger la batterie d'un appareil multimédia et/ou des boutons de commande par exemple de groupe de ventilation chauffage. La paroi 9 supérieure comporte un aménagement pour accueillir un appareil multimédia tel que par exemple un smartphone. Cet aménagement est matérialisé par une cavité 10 sensiblement rectangulaire comportant un volet 11 monté rotatif et incliné vers arrière, muni d'un appendice de forme rectangulaire 16. Une description plus approfondie du support 1 va être effectuée ci-dessous à l'aide des figures 2 et 3.

[Fig.2] Les figures 2 et 3 sont respectivement une vue agrandie du support 1 sur lequel l'appareil multimédia, non représenté, est maintenu et une vue de profil du support sur lequel est représenté un appareil multimédia 15, suivant l'invention. Plus particulièrement la figure 2 montre le support 1 avec une partie du bras 2. La base 12 du volet 11 venant en appui sur la bordure arrière 13 inclinée De la cavité 10 rectangulaire. Le volet 11 comporte un appendice 16 venant en saillie radiale sur sa face avant. Cet appendice 16 de forme rectangulaire comporte une boursouflure 17 le long de son extrémité libre, comme cela est montré plus particulièrement sur la figure 3. On comprend que le dos du smartphone 15 vient reposer sur cet appendice 16 tandis que l'extrémité inférieure du smartphone 15 vient en butée contre la paroi 18 légèrement incliné avant de la cavité 10. En outre, une ouverture traversante 19 est prévue dans la paroi de fond 20 de la cavité 10, dimensionnée pour le passage d'un câble d'alimentation 21. Avantageusement, la prise male USB 22 du câble peut être branchée sur la prise femelle USB 23 sur la face avant du support 1 ainsi la longueur du câble d'alimentation 21 peut être considérablement réduite. Lorsque le smartphone 15 n'est pas présent, le volet 11 est articulé à sa base par une liaison pivot 24 et il peut est rabattu suivant la flèche 27 sur la paroi supérieure du support 1 pour former une surface uniforme fournissant une bonne qualité perçue. A cet effet, lors de la fermeture du volet 11, l'appendice 16 vient s'engager librement dans le passage 25 aménagé pour le passage du câble 21 prévue pour l'alimentation du smartphone 15. Utilement, un clip 26 placé sur l'avant de la paroi inférieure du support 1 permet de retenir le câble d'alimentation 21.

[Fig.4] La figure 4 est une vue de profil du support 1 sur lequel l'appareil multimédia 15 est fixé par la pince 31 de type crocodile d'un élément de supportage 30 indépendant du support 1. Cet élément de supportage 30 est fixé d'une part sur l'appendice 16, émergeant du volet 11, muni à son extrémité libre d'une boursouflure 17 et d'autre part sur les bords latéraux du smartphone 15 par un système à mors 32 se rapprochant l'un de l'autre sous l'effet de moyens élastiques. De cette façon, le smartphone 15 est fixé solidement sur le support 1 et ne risque pas de chuter malencontreusement lors des déplacements du véhicule.

## Revendications

1. Agencement de support (1) adapté pour maintenir un appareil multimédia (15) nomade dans l'habitacle d'un véhicule, dans lequel le dit support (1) est configuré pour être fixé sur un bras (2), ledit bras (1) s'étendant depuis une tubulure (3) guidant la colonne de direction (4),
dans lequel le support (1) comporte une cavité (10) ménagée depuis sa paroi supérieure,
dans lequel la cavité (10) comporte des parois avant (18) et arrière (13) transversales inclinées, et
dans lequel la cavité (10) comporte dans son fond un passage (19) traversant à proximité de la paroi inclinée avant (18),
et dans lequel un volet (11) est monté pivotant, en position ouvert le volet (11) vient en appui sur la paroi inclinée arrière (13) de la cavité (10), en position fermé le volet (11) obture la cavité (10).

2. Agencement de support (1) selon la revendication 1, **caractérisé en ce que** le support (1) est fixé sur le bras (2) par clippage.

3. Agencement de support (1) selon l'une quelconque des revendications 1 ou 2, **caractérisé en ce que** le support (1) comporte une série de prise (8) de type USB ou d'autre type d'alimentation.

4. Agencement de support (1) selon la revendication 1, **caractérisé en ce que** le volet (11) comporte un appendice (16) sous forme d'une platine rectangulaire disposée en saillie radiale, orienté vers l'avant.

5. Agencement de support (1) selon l'une quelconque la revendication 4, **caractérisé en ce que** l'appendice (16) est prolongé par une boursouflure (17) sensiblement cylindrique à son extrémité libre.

6. Véhicule comprenant un agencement de support (1) selon l'une quelconque des revendications 1 à 5 fixé sur un bras s'étendant depuis la tubulure (2) de guidage de la colonne de direction (4).

## Patentansprüche

1. Halterungsanordnung (1), die zum Halten eines mobilen Multimediageräts (15) in einem Fahrzeuginnenraum geeignet ist, wobei die Halterung (1) so konfiguriert ist, dass sie an einem Arm (2) befestigt werden kann,
wobei sich der Arm (1) von einem Rohr (3) aus erstreckt, das die Lenksäule (4) führt,
wobei der Träger (1) einen Hohlraum (10) aufweist, der von seiner oberen Wand aus ausgebildet ist,
wobei der Hohlraum (10) geneigte, quer verlaufende Vorder- (18) und Rückwände (13) aufweist, und
wobei der Hohlraum (10) in seinem Boden einen Durchgang (19) aufweist, der in der Nähe der vorderen schrägen Wand (18) verläuft,
und wobei eine Klappe (11) schwenkbar angebracht ist, wobei die Klappe (11) in der offenen Position an der hinteren geneigten Wand (13) des Hohlraums (10) zur Anlage kommt, wobei die Klappe (11) in der geschlossenen Position den Hohlraum (10) verschließt.

2. Trägeranordnung (1) nach Anspruch 1, **dadurch gekennzeichnet, dass** der Träger (1) an dem Arm (2) durch Klippen befestigt ist.

3. Trägeranordnung (1) nach einem der Ansprüche 1 oder 2, **dadurch gekennzeichnet, dass** der Träger (1) eine USB-Steckerreihe (8) oder eine andere Zuführart aufweist.

4. Trägeranordnung (1) nach Anspruch 1, **dadurch gekennzeichnet, dass** die Klappe (11) einen Fortsatz (16) in Form einer rechteckigen Platte aufweist, die radial nach vorn gerichtet angeordnet ist.

5. Trägeranordnung (1) nach Anspruch 4, **dadurch gekennzeichnet, dass** der Ansatz (16) an seinem freien Ende durch eine im Wesentlichen zylindrische Wulst (17) verlängert ist.

6. Fahrzeug mit einer Trägeranordnung (1) nach einem der Ansprüche 1 bis 5, die an einem Arm befestigt ist, der sich von dem Führungsrohr (2) der Lenksäule (4) erstreckt.

## Claims

1. Support arrangement (1) adapted to hold a portable multimedia device (15) in the passenger compartment of a vehicle, in which said support (1) is configured to be fixed on an arm (2), said arm (1) extending from a tube (3) guiding the steering column (4),
in which the support (1) comprises a cavity (10) formed from its upper wall,
in which the cavity (10) comprises inclined transverse front (18) and rear (13) walls, and
in which the cavity (10) comprises in its bottom a passage (19) passing through near the inclined front wall (18),
and in which a flap (11) is pivotally mounted, in the open position the flap (11) comes to bear on the inclined rear wall (13) of the cavity (10), in the closed position the flap (11) closes the cavity (10).

2. Support arrangement (1) according to claim 1, **characterized in that** the support (1) is fixed to the arm (2) by clipping.

3. Support arrangement (1) according to any one of claims 1 or 2, **characterized in that** the support (1) comprises a series of sockets (8) of the USB type or other type of power supply.

4. Support arrangement (1) according to claim 1, **characterized in that** the flap (11) comprises an appendage (16) in the form of a rectangular plate arranged in radial projection, oriented towards the front.

5. Support arrangement (1) according to any one of claims 4, **characterized in that** the appendage (16) is extended by a substantially cylindrical bulge (17) at its free end.

6. A vehicle comprising a support arrangement (1) according to any one of claims 1 to 5 fixed to an arm extending from the guide tube (2) of the steering column (4).
